# EUROPEAN PATENT SPECIFICATION

(11) **EP 3 253 194 B1**
(45) Date of publication and mention of the grant of the patent: **30.12.2020**
(21) Application number: 15704856.2
(22) Date of filing: 06.02.2015
(51) Int. Cl.: A01G 9/12, A01G 17/10

(54) **MOVABLE STAKE AND METHOD FOR SUPPORTING AND TRAINING ONE OR MORE BRANCHES IN PLANT CULTIVATION**
BEWEGLICHE STÜTZE UND VERFAHREN ZUM STÜTZEN UND TRAINIEREN EINER ODER MEHRERER ZWEIGE BEIM PFLANZENANBAU
TUTEUR MOBILE ET PROCÉDÉ DE SUPPORT ET D'ORIENTATION D'UNE OU PLUSIEURS BRANCHES DANS LA CULTURE DE PLANTES

(43) Date of publication of application: 13.12.2017
(73) Proprietor: Bortolussi, Claudio, 33080 Fiume Veneto (PN) (IT); Bortolussi, Franco, 33080 Fiume Veneto (PN) (IT)
(72) Inventor: Bortolussi, Claudio, 33080 Fiume Veneto (PN) (IT); Bortolussi, Franco, 33080 Fiume Veneto (PN) (IT)
(74) Representative: Giugni, Valter
(86) International application number: PCT/IB2015/050900
(87) International publication number: WO 2016/124981

(56) References cited:
- KR-A- 20120 138 356
- SU-A1- 1 316 597
- US-A- 6 021 601

## Description

### TECHNICAL FIELD OF INVENTION

The present invention is relative to a device suitable to be used in plant cultivation for supporting and training one or more branches, so as to change their position based on the succession of the seasons in the course of the year, for the purpose of protecting them from freezing weather during the cold seasons and of allowing their managed and guided growth in the warm seasons.

### BACKGROUND OF THE INVENTION

The cultivation of plant species sensitive to cold weather entails the use of methods designed to preserve the productive capabilities of the plants. In this scope are included plantations, such as vineyards and the like, practised in countries with cold winters or in places at high elevations.

The method provides for the growth of one or more branches that are allowed to grow either with the main trunk or as main branches on their own in the absence of a main trunk; in cold periods said branches are buried so as to be protected from freezing weather in order that they can eventually be ready to take the place of said main trunk if the latter is damaged by bad weather conditions, or else to sprout anew in the warm season in the case in which they are all main branches. This method can be used for a period that generally extends from one to five years, depending on the plant species, that is, until the hard woody consistency of the branches makes them susceptible to be broken during the bending operations.

In current practices, during the warm months, the branches are fastened in similar manner as the main trunk to support structures consisting of vertical posts that support horizontal wires. As the cold season approaches, the branches are released from the horizontal carrying wires or from the support stakes, they are placed on the ground so as to lie as much as possible parallel to the direction of the row of vines, and are covered with soil by the action of a plough drawn by a tractor. The operation with the plough, when carrying out the procedure according to the prior art method, must necessarily be performed on both sides of the row of plants to guarantee a suitable covering of said branches, and may generally require the work of operators to hold the branches being covered in a fixed position with the help of metal forks inserted into the ground so as to straddle the branches themselves.

At the end of the cold season, the branches must be returned to their initial position and secured to the horizontal carrying wire through the possible help of the current support stakes to which the branches are fastened.
The restoration process, according to the prior art, requires the removal of the soil that was previously piled up, through the use of a plough that returns the soil into the open furrows during the burying step, and the subsequent passage with blowing means or manual implements to remove the part of the soil nearest to the branches which, to protect the branches, cannot be removed with the plough.
The procedure is completed manually with the removal of the remaining soil, the metal forks, and by securing the branches to a horizontal carrying wire by tying them to the relative support stakes. Devices and methods to hibernate vines are known from e.g. SU 1 316 597 A1.

### SUMMARY OF THE INVENTION

The objective of the invention specified hereunder is to propose a movable stake to support and manage the growth of one or more branches of a plant cultivation, so as to facilitate and accelerate the operations required for burying the branches underground for the winter and for returning them to the open air at the end of the cold season. The invention is particularly suitable to be used in vineyards.

The movable support stake for the branches facilitates the growth of the branches themselves, being firmly secured thereto, and makes it so that the branches are not damaged during the mechanical operations carried out to bury them and then to extract them, without the necessity of untying and freeing the branches from the stakes or from the horizontal wires, in order to lay the branches horizontally on the ground.

This objective is achieved with the movable stake, the characteristics of which are defined in the claims given at the end of the present description.

### BRIEF DESCRIPTION OF THE FIGURES

The technical characteristics of the invention will be described with the help of the enclosed figures, which illustrate an embodiment of the same purely by way of a non-limiting example, wherein:
- Fig. 1 shows a perspective view of the movable stake to be used to support and train the branches of a plant cultivation;
- Fig. 2 illustrates a schematic side view of a part of the vineyard that employs the movable stake of Fig. 1 for supporting the branches;
- Fig. 3 illustrates a schematic side view of the part of the vineyard of Fig. 2 in which is shown the operation for positioning and fastening the branches to the ground together with the movable stake;

- Fig. 4 shows a schematic side view of the part of the vineyard of Fig. 2 in which are shown the branches and the movable stake completely buried;
- Fig. 5 illustrates a schematic side view of the part of the vineyard of Fig. 2 in which is shown the operation for extracting the branches from the ground and coupling them to a support wire.

### DETAILED DESCRIPTION OF THE INVENTION

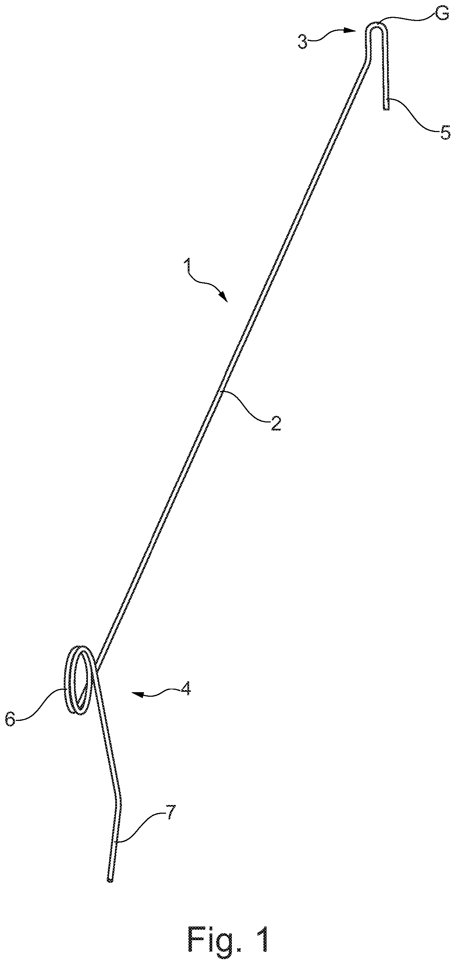

An embodiment of a movable stake 1 to support and train the branches 9 of a plant cultivation, such as a vineyard or the like, is shown in the perspective view of Fig. 1.
The movable stake 1 according to the invention consists of an elastically or mechanically deformable element, preferably made of steel, having a rectilinear elongate body 2 and shaped ends 3 and 4.
The deformable element is preferably a metal rod or wire having an elastic behaviour; naturally, it can also be made up entirely of a completely flexible element of metallic material or fibre composite.

A first end 3 of the movable stake 1 is shaped as a hook G to be engaged on a horizontal wire 11 supporting the vegetation and ends preferably as a harpoon 5 suitable to be sunk into the ground to prevent sideway shifts of the movable stake 1 with respect to the longitudinal direction of the plant row. A second end 4 may be in a form such as to enhance the deformability of the stake, such as for example a coil spring 6 or a ribbon spring, suitable to allow the elastic rotation of the movable stake 1 between the two positions of engaging the wire or of burying the branches, respectively.
A variant embodiment that makes it possible to achieve the same objective is represented by a stake consisting of two joined parts, connected for example through a hinge, rings or eyelets.
Said second end 4 terminates with a harpoon 7 that ensures a stable anchoring of the movable stake 1 in the ground; the harpoon 7 is preferably bent at an angle so as to counteract with a resisting moment the forces that, during the burying operations, could rotate the movable stake 1 with respect to the longitudinal direction of the row of plants.

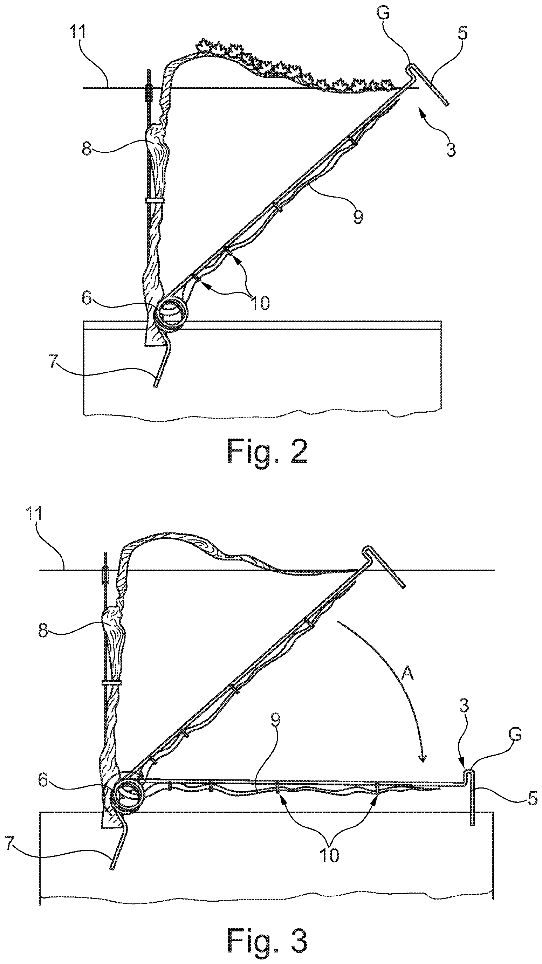

The movable stake 1 is installed near the base of the trunk of a plant, in particular a grape vine 8, as shown in Figures 2-5, by driving the harpoon 7 into the ground. On the rectilinear elongate body 2 of said movable stake 1 are secured the branches 9 through known means, such as for example tie fasteners 10.

Depending on the plant species, the cultivation may allow for the growth of a plurality of branches. In this case, near the base of the main trunk 8, are installed a number of movable stakes 1, or the cultivation may provide for the growth and management of only the branches that are above the grafting level on the plant.

In the warm period, the movable stake 1 engages said supporting horizontal wire 11 (Fig. 2) with the harpoon 5 so as to keep the branches 9 raised above the ground and in a suitable position for their growth.
The movable stake 1 and the branches 9 remain in this position until the onset of the winter period.

The arrow A in Fig. 3 shows the rotation applied on the branches 9 and the movable stake 1 during the burial operation, carried out with the approach of the cold period.
In the course of this procedure, an operator releases the harpoon 5 from the supporting horizontal wire 11 and directs the branches 9 fastened to the movable stake 1 until they reach the ground; the operator completes the procedure by pushing down said first free end 3 so that said harpoon 5 is driven into the ground.
The winter burial procedure is completed with the help of a machine which, drawing a plough along the vine row, moves the soil so as to cover the branches 9 fastened to the movable stake (Fig. 3).
The use of the movable stake 1 allows a more accurate alignment of the branches 9 by reducing the width of the ridge of soil created with the piled-up soil. Consequently, it is sufficient to create a ridge of soil of limited size to protect the branches, thus cutting the necessary working times.

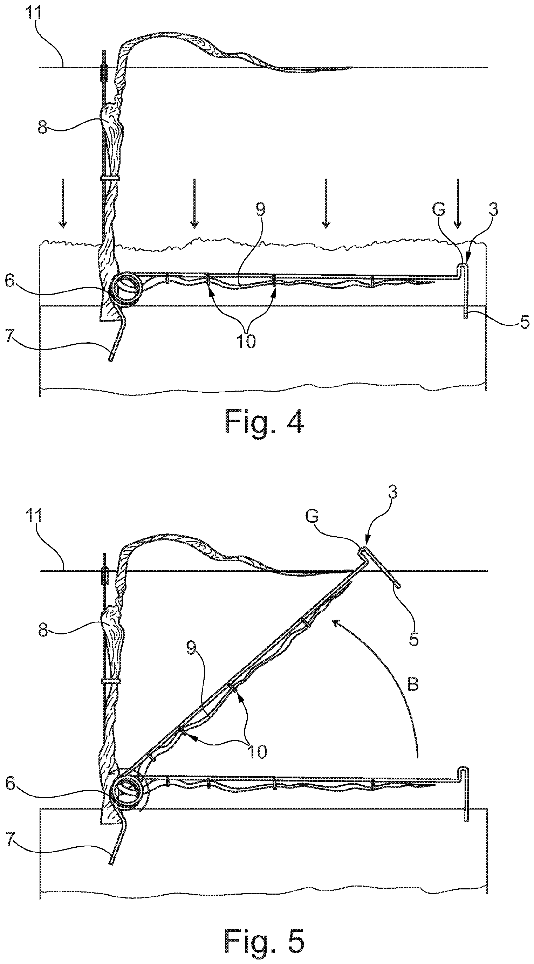

During the cold period, as shown in Fig. 4, the branches 9 lie covered under a layer of soil. The branches thus protected, in the case in which the main branch 8 is compromised by the rigid winter conditions, can be used to completely replace said main branch or to contribute with their own buds to avoid drops in production, or, in the case of single branches they can survive the rigid climate and sprout again in the following season.

At the end of the cold period, the branches 9 are dug out of the soil bed and fastened to the supporting horizontal wire 11 so as to resume their normal growth (Fig. 5). Thanks to the presence of the movable stake 1, the restoration procedures can be carried out in a simple and rapid manner compared to those carried out according to the prior art, without having to tie the branches again to the current support stakes.
After having loosened the soil bed by means of a plough, it is sufficient to perform a single passage along the edge of the plant row with a blowing machine or hand implements so as to remove only the part of the layer of soil that protected the branches 9 and proceed manually to lift said branches 9. In Fig. 5, the arrow B shows the rotation applied to the movable stake 1 and to the branches 9 so as to engage the first free end 3 of said movable stake 1 on the supporting horizontal wire 11.

Also in the case of the restoration procedure, which returns the plant to the initial conditions of Fig. 2, the use of a movable stake 1 enables the operator to carry out a safer restoration procedure and to shorten the time required. In particular, the restoration procedure does not require the operators to use any tools.

## Claims

1. A movable stake (1) for one or more branches (9) in a plant cultivation, such as a vineyard or the like, in which at least a part of the branches (9) are buried in the cold season, the movable stake (1) being constituted by a deformable element (2) onto which the branches (9) to be buried are engaged, the deformable element (2) has a first free end (3) and a second end (4), the first free end (3) is apt to be alternately engaged in the ground or onto a horizontal wire (11) for supporting the branches of the plant cultivation **characterized in that** the first free end (3) of the deformable element (2) is shaped as a hook (G) and terminates with a harpoon (5) configured to be inserted into the ground to constrain the position of the movable stake (1) or to engage onto a horizontal wire (11) supporting the vegetation, while the second end (4) of the deformable element (2) is anchored in the ground and apt to allow the rotation of the deformable element (2) to insert said first free end (3) into the ground.

2. A movable stake (1) for one or more branches (9) in a plant cultivation as in claim 1, **characterized in that** the second end (4) is shaped as a coil spring (6) or a ribbon spring or the like, and terminates with an angle shaped harpoon (7).

3. A movable stake (1) for one or more branches (9) in a plant cultivation as in claim 1, **characterized in that** it is entirely formed by a totally flexible element preferably made of metal or fiber composite material.

4. A movable stake (1) for one or more branches (9) in a plant cultivation as in claim 1, **characterized in that** the deformable element (2) consists of two joined parts connected by a hinge, rings or eyelets.

5. Method to handle one or more branches (9) in a plant cultivation, such as a vineyard or the like, by burying at least a part of said branches (9), **characterized in that** the branches (9) to be buried are coupled to a movable stake (1) according to claim 1, said branches (9) during the cold season are buried in the ground by rotating them together with the deformable element (2) and engaging said first free end (3) in the ground and then covering the branches (9) and the deformable element (2) with earth, while in the warm season, the branches (9) are dug out together with the deformable element (2) from the earth covering them and are hooked to the plant cultivation supporting wire (11) of plant cultivation by rotating them together with the movable stake (1) so that the first free end (3) engages said supporting horizontal wire (11) by means of said hook (G).

6. Method to handle one or more branches (9) in a plant cultivation as in claim 5 **characterized in that** said movable handle (1) together with the branches to be buried (9) is anchored to the ground by inserting into the same the deformable element (2) by said harpoon (5) which terminates said free end (3).

7. Method to handle one or more branches (9) in a plant cultivation as in claim 6 **characterized in that** the branches (9) to be buried are fastened to said movable stake (1) by means of laces or the like.

## Patentansprüche

1. Beweglicher Pfahl (1) für einen oder mehrere Zweige (9) in einem Pflanzenanbau, wie einem Weinberg oder dergleichen, bei dem zumindest ein Teil der Zweige (9) in der kalten Jahreszeit eingegraben ist, wobei der bewegliche Pfahl (1) aus einem verformbaren Element (2) besteht, auf das die einzugrabenden Zweige (9) aufgesetzt werden, das verformbare Element (2) ein erstes freies Ende (3) und ein zweites Ende (4) aufweist, wobei das erste freie Ende (3) dazu geeignet ist, abwechselnd mit dem Boden oder einem horizontalen Draht (11) zum Abstützen der Zweige des Pflanzenanbaus in Eingriff gebracht zu werden, **dadurch gekennzeichnet, dass** das erste freie Ende (3) des verformbaren Elements (2) als ein Haken (G) geformt ist und in einer Harpune (5) endet, die dazu ausgelegt ist, in den Boden eingeführt zu werden, um die Position des beweglichen Pfahls (1) zu begrenzen oder mit einem horizontalen Draht (11) zum Abstützen der Vegetation in Eingriff zu kommen, während das zweite Ende (4) des verformbaren Elements (2) im Boden verankert ist und dazu geeignet ist, die Drehung des verformbaren Elements (2) zu ermöglichen, um das erste freie Ende (3) in den Boden einzuführen.

2. Beweglicher Pfahl (1) für einen oder mehrere Zweige (9) in einem Pflanzenanbau nach Anspruch 1, **dadurch gekennzeichnet, dass** das zweite Ende (4) als Schraubenfeder (6) oder Bandfeder oder dergleichen geformt ist und in einer winkelförmigen Harpune (7) endet.

3. Beweglicher Pfahl (1) für einen oder mehrere Zweige (9) in einen Pflanzenanbau nach Anspruch 1, **dadurch gekennzeichnet, dass** er gänzlich durch ein vollkommen flexibles Element gebildet wird, das vorzugsweise aus Metall oder Faserverbundmaterial besteht.

4. Beweglicher Pfahl (1) für einen oder mehrere Zweige (9) in einem Pflanzenanbau nach Anspruch 1, **dadurch gekennzeichnet, dass** das verformbare Element (2) aus zwei verbundenen Teilen besteht, die durch ein Scharnier, Ringe oder Ösen verbunden sind.

5. Verfahren zum Handhaben eines oder mehrerer Zweige (9) in einem Pflanzenanbau, wie z.B. einem Weinberg oder dergleichen, durch Eingraben mindestens eines Teils der Zweige (9), **dadurch gekennzeichnet, dass** die einzugrabenden Zweige (9) mit einem beweglichen Pfahl (1) nach Anspruch 1 verbunden werden, die Zweige (9) während der kalten Jahreszeit in den Boden eingegraben werden, indem sie zusammen mit dem verformbaren Element (2) gedreht werden und das erste freie Ende (3) mit dem Boden in Eingriff gebracht wird und dann die Zweige (9) und das verformbare Element (2) mit Erde bedeckt werden, wogegen die Zweige (9) während der warmen Jahreszeit zusammen mit dem verformbaren Element (2) aus der sie bedeckenden Erde ausgegraben und an dem pflanzenbaulichen Stützdraht (11) für den Pflanzenanbau eingehakt werden, indem sie zusammen mit dem beweglichen Pfahl (1) so gedreht werden, dass das erste freie Ende (3) mittels des Hakens (G) mit dem horizontalen Stützdraht (11) in Eingriff kommt.

6. Verfahren zum Handhaben eines oder mehrerer Zweige (9) in einem Pflanzenanbau nach Anspruch 5, **dadurch gekennzeichnet, dass** der bewegliche Griff (1) zusammen mit den einzugrabenden Zweigen (9) am Boden verankert wird, indem in denselben das verformbare Element (2) durch die Harpune (5) eingeführt wird, die das freie Ende (3) abschließt.

7. Verfahren zum Handhaben eines oder mehrerer Zweige (9) in einem Pflanzenanbau nach Anspruch 6, **dadurch gekennzeichnet, dass** die einzugrabenden Zweige (9) an dem beweglichen Pfahl (1) mit Hilfe von Schnüren oder dergleichen befestigt werden.

## Revendications

1. Tuteur mobile (1) pour une ou plusieurs branches (9) dans une culture de plantes, telle qu'un vignoble ou similaire, dans laquelle au moins une partie des branches (9) est enterrée pendant la saison froide, le tuteur mobile (1) étant constitué d'un élément déformable (2) sur lequel sont fixées les branches (9) à enterrer, l'élément déformable (2) présente une première extrémité (3) libre et une deuxième extrémité (4), la première extrémité (3) libre convient pour être mise en prise alternativement avec le sol ou avec un câble (11) horizontal pour supporter les branches de la culture de plante, **caractérisé en ce que** la première extrémité (3) libre de l'élément déformable (2) a la forme d'un crochet (G) et se termine par un harpon (5) configuré pour être inséré dans le sol pour contraindre la position du tuteur mobile (1) ou à être mis en prise sur un câble (11) horizontal supportant la végétation, tandis que la seconde extrémité (4) de l'élément déformable (2) est ancrée dans le sol et apte à permettre la rotation de l'élément déformable (2) pour insérer ladite première extrémité (3) libre dans le sol.

2. Tuteur mobile (1) pour une ou plusieurs branches (9) dans une culture de plantes selon la revendication 1, **caractérisé en ce que** la seconde extrémité (4) a la forme d'un ressort hélicoïdal (6) ou d'un ressort à ruban ou similaire, et se termine par un harpon en forme d'angle (7).

3. Tuteur mobile (1) pour une ou plusieurs branches (9) dans une culture de plantes selon la revendication 1, **caractérisé en ce qu'**il est entièrement formé par un élément totalement flexible réalisé de préférence en matériau composite métallique ou fibreux.

4. Tuteur mobile (1) pour une ou plusieurs branches (9) dans une culture de plantes selon la revendication 1, **caractérisé en ce que** l'élément déformable (2) consiste en deux parties jointes reliées par une charnière, des anneaux ou des œillets.

5. Procédé pour manipuler une ou plusieurs branches (9) dans une culture de plantes, telle qu'un vignoble ou similaire, en enfouissant au moins une partie desdites branches (9), **caractérisé en ce que** les branches (9) à enterrer sont couplées à un tuteur mobile (1) selon la revendication 1, lesdites branches (9) pendant la saison froide sont enterrées dans le sol en les faisant pivoter avec l'élément déformable (2) et en mettant en prise ladite première extrémité (3) libre avec le sol puis en recouvrant les branches (9) et l'élément déformable (2) avec de la terre, tandis que pendant la saison chaude, les branches (9) sont déterrées avec l'élément déformable (2) de la terre qui les recouvre et sont accrochées au câble (11) de support de culture de plantes en les faisant pivoter avec le tuteur mobile (1) de sorte que la première extrémité (3) libre entre en prise avec ledit câble (11) horizontal de support au moyen dudit crochet (G).

6. Procédé pour manipuler une ou plusieurs branches (9) dans une culture de plantes selon la revendication 5, **caractérisé en ce que** ladite poignée mobile (1) est ancrée au sol, avec les branches à enterrer (9), en insérant dans celle-ci l'élément déformable (2) par ledit harpon (5) qui termine ladite extrémité (3) libre.

7. Procédé pour manipuler une ou plusieurs branches (9) dans une culture de plantes selon la revendication 6, **caractérisé en ce que** les branches (9) à enterrer sont fixées audit tuteur mobile (1) au moyen de lacets ou similaires.
